# DEMANDE DE BREVET EUROPEEN

(11) **EP 0 522 983 A1**
(43) Date de publication de la demande: **13.01.1993**
(21) Numéro de dépôt: 92420229.4
(22) Date de dépôt: 03.07.1992
(51) Int. Cl.: F16D 41/30, B62M 9/10

(54) **Moyeu à roue libre pour cycles**

(30) Priorité: 09.07.1991 FR 9108998
(71) Demandeur: B.G. INNOVATION (S.A.R.L.), F-74000 Annecy (FR)
(72) Inventeur: Mercat, Jean-Pierre, F-74960 Cran-Gevrier (FR); Ledys, Etienne, F-74000 Annecy (FR); Bouffard, Claude, F-59000 Lille (FR)
(74) Mandataire: Lejeune, Benoit

(57) **Abrégé**

Moyeu de roue libre pour cycles du type dans lequel l'entraînement du moyeu 2 de roue 1, 1′ par la roue libre 100, 100′ se fait par une liaison unidirectionnelle constituée par la coopération d'au moins un cliquet 16, 16′ mobile sollicité par un système élastique 18, 163 pour passer d'une position escamotée inactive vers une position active en saillie, dans laquelle il coopère avec une denture, caractérisé en ce que le cliquet 16, 16′ est mobile dans une direction ZZ′ hors d'un plan diamétral P′, le cliquet étant disposé mobile sur le moyeu de roue 1, 1′ ou sur la roue libre 100, 100′, tandis que la denture est solidaire respectivement de ladite roue libre 100, 100′ ou du moyeu de roue 1, 1′.

## Description

La présente invention est relative à un moyeu à roue libre se montant sur la roue libre arrière d'un cycle et comportant un ou plusieurs pignons aptes à coopérer avec une chaîne d'entraînement déplaçable transversalement par un dérailleur, dans le cas de plusieurs pignons.

Dans les moyeux actuels, la liaison en rotation unidirectionnelle entre une cage prolongeant le corps du moyeu et un corps de roue libre portant les pignons, est assuré par deux cliquets tangentiels se déplaçant dans un plan perpendiculaire à l'axe et coopérant avec un rochet et interposés avec ce crochet entre les éléments précités.

Avec un tel montage, lorsqu'il est nécessaire d'augmenter la valeur de l'effort transmis, par exemple pour réaliser un moyeu pour vélo tout terrain, il est nécessaire d'accroître la dimension des cliquets. Cela entraîne une augmentation du diamètre extérieur du corps de roue libre et, en conséquence, nécessite la réalisation de moyeux spécifiques et différents conduisant à des surcoûts de fabrication et de stockage.

A cela, il faut ajouter que de telles modifications nécessitent d'avoir recours à des composants spéciaux non standards, par exemple pour les roulements et pour les joints, ce qui augmente encore le prix de revient des moyeux.

La présente invention a pour but de remédier à cet inconvénient en fournissant un moyeu de roue libre pouvant recevoir un nombre de cliquets en rapport avec l'effort à transmettre, sans que cela modifie son encombrement extérieur ou intervienne sur le dimensionnement des éléments de ce moyeu.

Ainsi le moyeu de roue libre selon l'invention, du type dans lequel l'entraînement du moyeu de roue par la roue libre se fait par une liaison unidirectionnelle constituée par la coopération d'au moins un cliquet mobile sollicité par un système élastique pour passer d'une position escamotée inactive vers une position en saillie, dans laquelle il coopère avec une denture, est caractérisé en ce que le cliquet est mobile dans une direction hors d'un plan diamétral, et est disposé mobile sur le moyeu de roue ou sur la roue libre, tandis que la denture est solidaire respectivement de ladite roue libre ou du moyeu de roue.

Selon une caractéristique complémentaire, il comprend plusieurs cliquets mobiles indépendants sollicités chacun de sa position escamotée vers sa position en saillie, par un ressort.

Selon une des dispositions, chaque cliquet mobile est pivotant autour d'un axe disposé sensiblement dans un plan diamétral, pour osciller dans une direction sensiblement parallèle à l'axe du moyeu.

Selon une autre disposition, chaque cliquet mobile est un piston coulissant dans une direction concourante à un plan diamétral.

Selon une disposition avantageuse, la direction de coulissement est telle qu'elle se décompose en au moins une direction parallèle à l'axe du moyeu.

Selon une disposition préférée, la denture est solidaire de la roue libre, tandis que les cliquets sont montés mobiles sur le moyeu de roue.

Selon une autre caractéristique complémentaire, la denture est disposée sur la face diamétrale (130) d'une colerette solidaire d'une douille, elle-même solidaire du corps de la roue libre.

Selon un montage préféré, la roue libre est pivotante autour d'une douille solidaire du moyeu et est retenue en translation par un épaulement réalisé sur ladite douille.

D'autres caractéristiques et avantages ressortiront de la description qui suit en référence aux dessins schématiques annexés représentant, à titre d'exemple non limitatif, une forme d'exécution de ce moyeu pour cycles.

Les figures 1 à 3 illustrent un premier mode de réalisation.

La figure 1 est une vue en perspective éclatée montrant en détail, les éléments du mécanisme d'entraînement unidirectionnel.

Les figures 2a et 2b sont des vues en bout, montrant d'une part le moyeu (figure 2a) et d'autre part, la roue libre (2b).

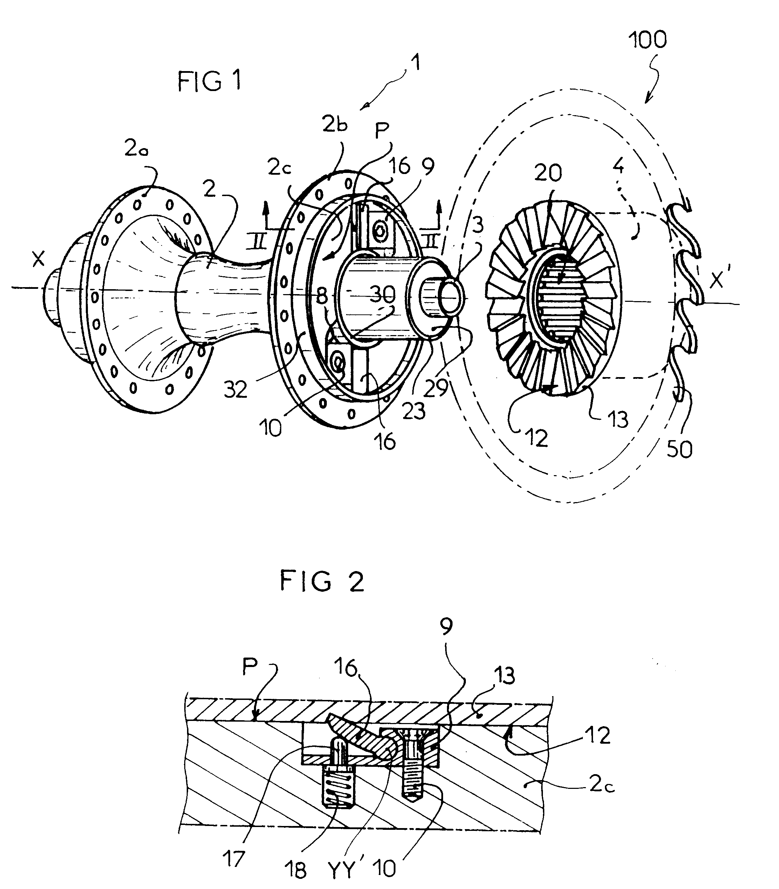

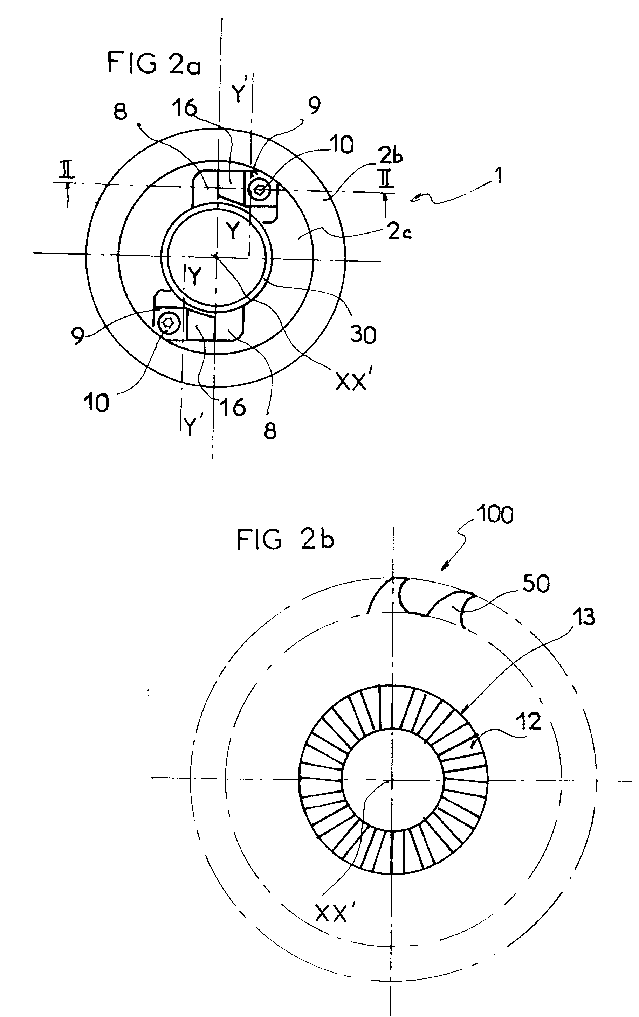

La figure 2 est une vue partielle en coupe suivant II-II des figures 1 et 2a montrant, à échelle agrandie, une forme d'éxécution d'un cliquet.

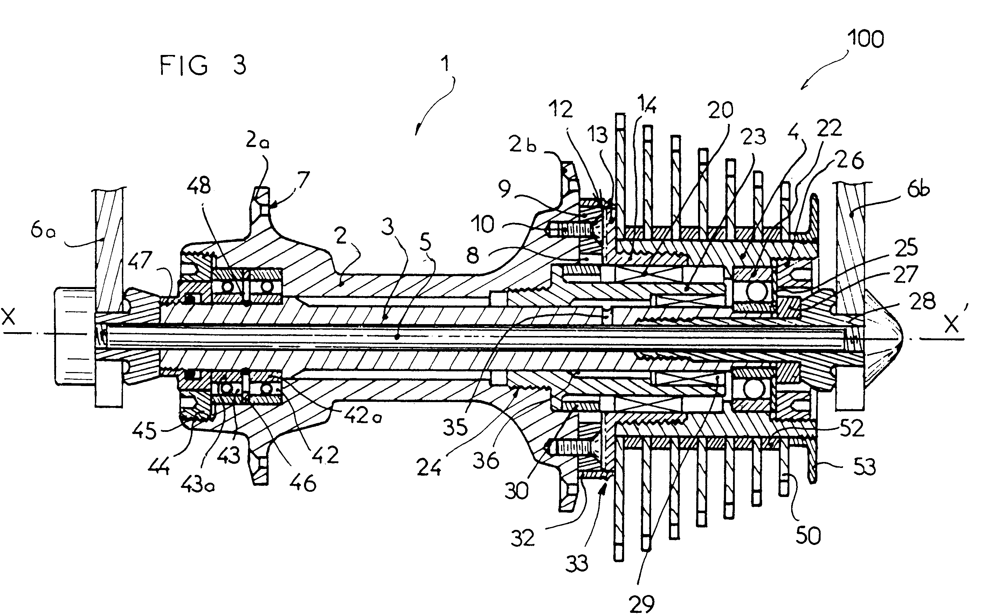

La figure 3 est une vue en coupe longitudinale de l'ensemble du moyeu.

Les figures 1 à 3 illustrent un premier mode de réalisation selon lequel les cliquets sont montés mobiles en pivotement sur le moyeu de roue libre pour osciller dans une direction parallèle à l'axe de la roue.

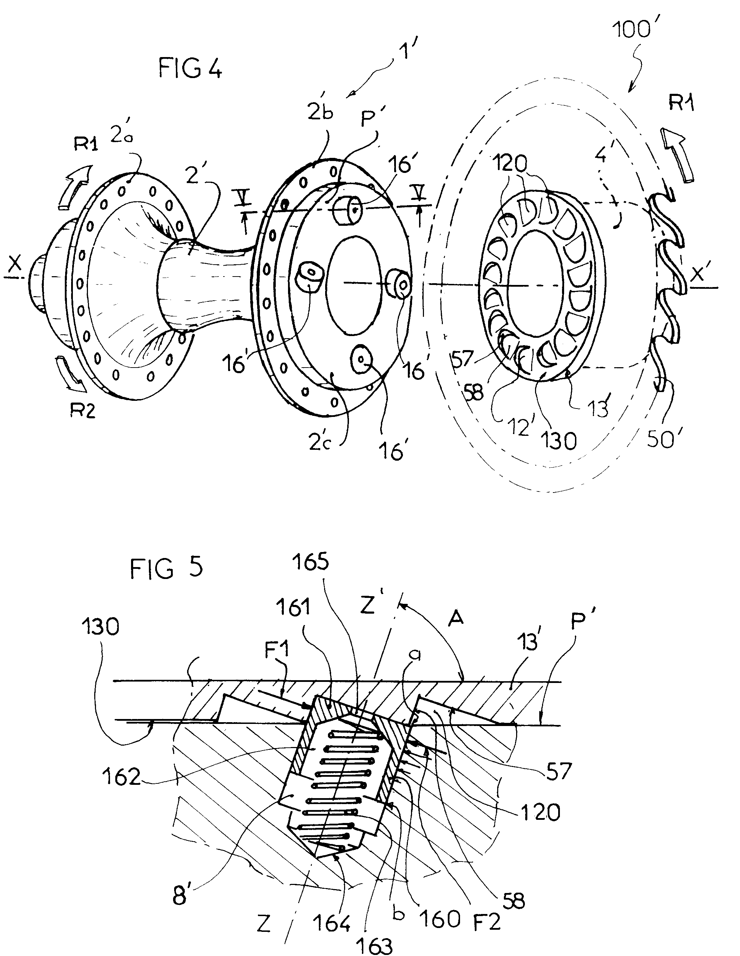

Les figures 4 à 9 illustrent un deuxième mode de réalisation.

La figure 4 est une vue similaire à la figure 1 montrant en perspective éclatée le moyeu et notamment les éléments du mécanisme d'entraînement.

La figure 5 est une vue en coupe selon V-V de la figure 4.

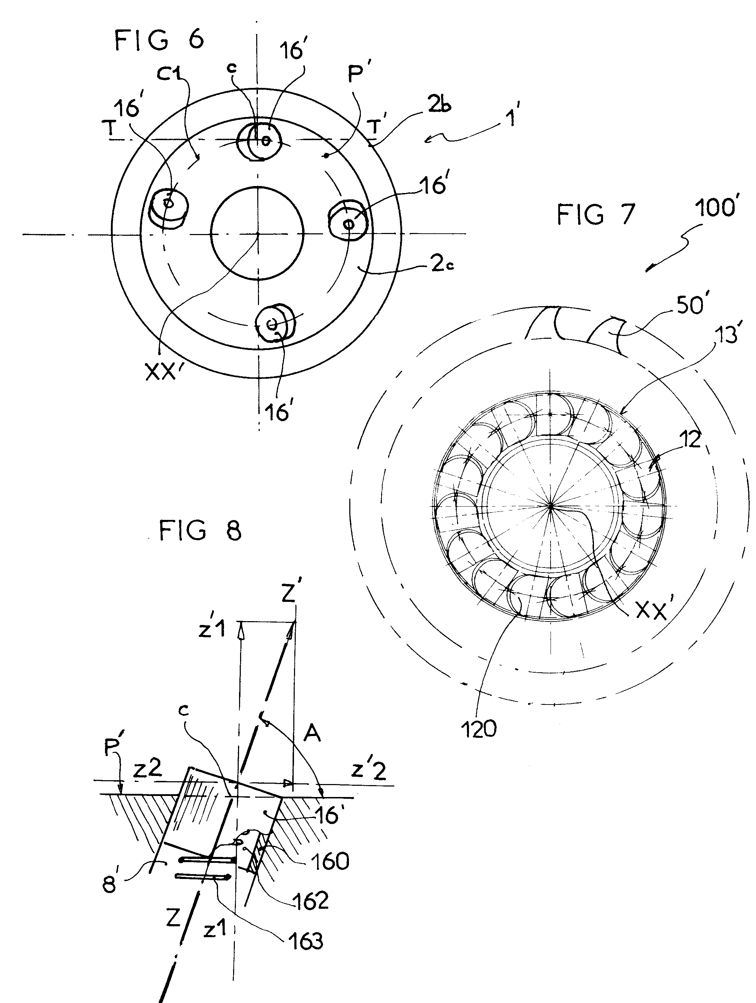

Les figures 6 et 7 sont des vues en bout, similaires aux figures 2a et 2b montrant le moyeu (figure 6) et la roue libre (figure 7).

La figure 8 est une vue schématique montrant plus spécialement le type de mouvement du cliquet.

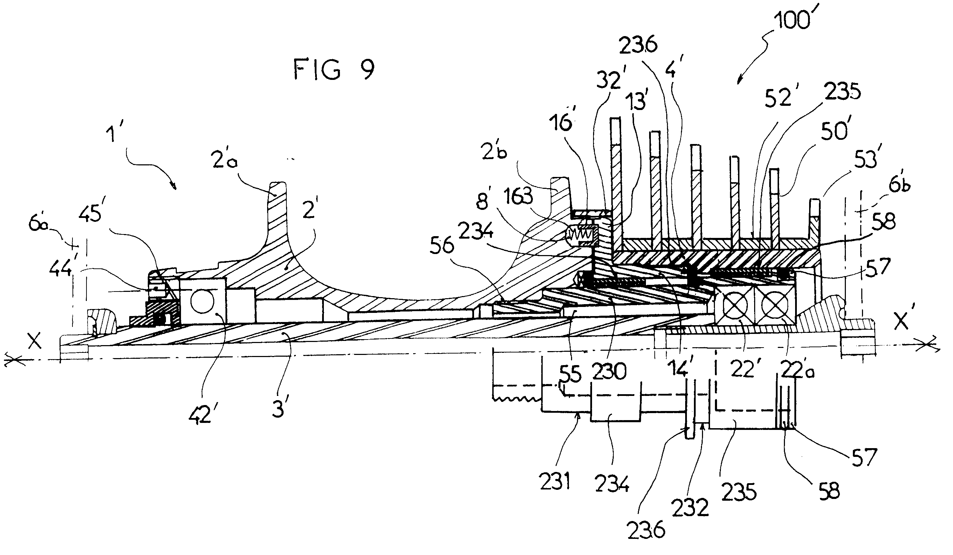

La figure 9 est une demie vue en coupe longitudinale de l'ensemble du moyeu.

Le moyeu de roue libre est constitué d'un moyeu de roue (1) entraîné unidirectionnellement par la roue libre (100). Sur les figures, la référence (2) désigne le corps de moyeu monté libre en rotation sur un arbre creux (3), tandis que la référence (4) désigne le corps de roue libre, la tige d'un mécanisme permettant le blocage rapide du moyeu aux extrémités des fourches (6a, 6b) d'un cycle portant la référence (5). La corps de moyeu (2) est solidaire de deux flasques (2a, 2b) munis de trous (7) pour la fixation de rayons, non représentés, le reliant à la jante de la roue.

Selon un premier mode de réalisation, le flasque (2b) du corps de moyeu (2) comporte plusieurs logements (8) qui, au nombre de deux dans cette forme d'exécution, débouchent vers l'extérieur et en vis-à-vis d'un rochet (12) ménagé sur la face diamétrale d'une collerette (13) solidaire du corps de roue libre (4). Chaque logement (8) est ici réalisé dans une portée cylindrique (2c) du corps (2). Chacun des logements (8) est destiné à recevoir un porte-cliquet (9) fixé par une vis (10), et dont le cliquet (16) sollicité par un poussoir (17) à ressorts (18) oscille dans une direction parallèle à l'axe (XX′) du moyeu et a tendance à faire saillie d'une face diamétrale (P) de celui-ci pour venir s'engager dans la denture du rochet (12). Comme on peut le voir particulièrement aux figures 2 et 2a, chaque cliquet est pivotant autour d'un axe (YY′), disposés parallèlement dans un plan diamétral.

Le corps de roue libre (4) est guidé en rotation d'une part par un roulement à aiguilles (20), et d'autre part, par un roulement à billes(22). Le roulement à aiguilles (20) est interposé d'une part entre une douille (14) solidaire du rochet (12) et d'autre part, un manchon tubulaire (23) vissé axialement et en (24) dans le corps de moyeu (2).

Quant au roulement à billes (22) qui, de façon connue, est interposé entre le corps de roue libre (4) et une portée de l'arbre creux (3), il est ici du type étanche, c'est-à-dire comporte, en direction de l'extérieur, une membrane (25) apte à s'opposer à la pénétration de poussières dans le mécanisme. La cage extérieure de ce roulement est calée par une douille écrou (26), tandis que sa cage intérieure est plaquée contre un épaulement de l'arbre (3) par une cale (27), interposée entre elle et la tête d'une vis de bout d'arbre (28) vissée à l'extrémité de l'arbre creux (3). Le guidage en rotation de cette partie est complété par un roulement à aiguilles (29) interposé entre l'arbre creux (3) et l'alésage interne de l'extrémité libre du manchon tubulaire (23).

Comme le montrent plus en détail les figures 1 et 3, la portée cylindrique (2c) du flasque (2b) est associée d'une part à une bague intérieure (30), et d'autre part, à une bague extérieure (32) la ceinturant et s'opposant à tout échappement des cliquets (16) hors de leur support (9).

La bague extérieure (32) se prolonge au moins partiellement au-dessus de la colerette (13) portant le redan par une partie en forme de joint à lèvre d'étanchéité (33) s'opposant à l'introduction de la poussière dans le mécanisme.

Il ressort de ce qui précède que l'ensemble du mécanisme assurant le guidage en rotation de la roue libre, de même que l'ensemble du mécanisme de liaison unidirectionnelle de cette roue libre avec le corps de moyeu, sont entièrement isolés de l'extérieur, d'un côté par le joint (33) précité, et de l'autre, par la membrane (26) associée au roulement (4). Cette étanchéité est mise à profit pour assurer un graissage centralisé de ces mécanismes, à partir d'un canal radial (35) traversant l'arbre creux (3) et débouchant à proximité du roulement (29), dans un logement annulaire (36) ménagé entre l'arbre (3) et la partie interne du manchon (23).

Bien entendu, ce graissage ne peut être réalisé qu'après extraction de la tige de blocage, donc après que la roue ait été désolidarisée des fourches (6a, 6b).

Le guidage en rotation de l'autre extrémité du corps de moyeu (2) est assuré par deux roulements à billes (42) et (43) dont les cages extérieures sont emmanchées dans un logement épaulé, approprié de ce corps de moyeu et sont plaquées contre l'épaulement de ce logement par une bague (44) se vissant en (45) dans le corps de moyeu (2). Ces deux cages extérieures sont espacées par une entretoise métallique (46), tel qu'en aluminium. Les cages intérieures (42a, 43a) des deux roulements sont emmanchées sur une portée cylindrique de l'arbre creux (3) avec montage serré pour celle (42a) et montage glissant pour celle (43a). Elles sont plaquées contre un épaulement de cet arbre par une bague filetée (47), vissée sur l'extrémité dudit arbre. Ces deux cages extérieures sont séparées par une entretoise (48) qui est réalisée en matériau déformable mais élastique, tel qu'en caoutchouc nitrile.

Grâce à cet agencement, en cas de serrage excessif de la bague (47) sur l'axe tubulaire (3), serrage conduisant à des frottements sur les deux roulements et à un freinage de la rotation du moyeu, la seule élasticité de la bague (48) permet d'écarter les bagues intérieures des roulements (42) et (43) au fur et à mesure que la bague (47) est elle-même dévissée, pour procéder à un nouveau réglage.

De façon connue, le corps de roue libre (4) est muni sur sa périphérie, de cannelures non représentées, constituant organe de positionnement et d'entraînement en rotation pour des pignons étagés (50) constituant les éléments du changement de vitesses. Ces pignons sont séparés les uns des autres par des entretoises (52) et sont calés en translation sur le corps (4) par un écrou (53) les plaquant contre la face de la collerette (13) qui est opposée à celle portant le rochet.

En fonctionnement, le mécanisme de liaison unidirectionnel entre le corps de roue libre et le corps de moyeu fonctionne de la même façon qu'un mécanisme à action tangentielle, mais présente l'avantage de pouvoir être surdimensionné et de transmettre dans de meilleures conditions, des couples plus élevés. Par ailleurs, pour augmenter la valeur du couple transmise par un tel moyeu, il suffit d'augmenter le nombre de cliquets, ce qui ne nécessite que de réaliser un ou deux logements supplémentaires dans la portée cylindrique (2c) du corps de moyeu (2), sans qu'il y ait lieu de modifier les dimensions d'aucune autre des pièces du moyeu ou de la roue libre. Ce montage permet donc, à partir d'une même pièce, de réaliser des moyeux pour différents types de cycles, et par exemple des moyeux pour vélos de route, pour des vélos tout terrain, ou pour des tandems. Cela simplifie la fabrication, réduit les stocks et permet de réduire le prix de revient du moyeu ainsi obtenu.

Il faut noter que pour éviter d'avoir à adapter la longueur du moyeu à la variation d'écartement des fourches entre un vélo de route et un vélo tout terrain, il suffit, après avoir démonté la vis de bout d'arbre (28), de remplacer l'entretoise (27) par un entretoise de longueur différente et, par exemple plus réduite lorsqu'il s'agit de passer d'un vélo tout terrain à un vélo de route.

Enfin, grâce à son mode de montage et de calage en translation, l'ensemble formé par le corps de roue libre (4), les pignons (50), la collerette (13) avec rochet (12) et les roulements (20) et (22), peut être aisément démonté pour remplacement par un ensemble comportant des pignons de rapports différents, ce qui évite de posséder plusieurs roues spécialisées, par exemple pour un parcours en montagne ou en plaine. Pour cela, il suffit, après desserrage et enlèvement de l'embout (28), d'exercer sur l'ensemble précité, un effort axial vers l'extérieur pour l'extraire du moyeu, puis après mise en place d'un autre ensemble, de remettre en place et serrer l'embout (28).

les figures 4 à 9 illustrent un deuxième mode de réalisation selon lequel les cliquets d'entraînement sont des pistons coulissant selon une direction hors du plan diamétral (P′) perpendiculaire à l'axe (XX′).

Pour la compréhension de la description qui va suivre, les pièces similaires, du moins dans leur fonction, porteront les mêmes références que pour le mode de réalisation précédent, mais avec un indice. Aussi pour certains éléments non décrits pour le deuxième mode de réalisation, il suffit de se reporter à ce qui a été décrit pour le premier mode d'exécution. Notons toutefois que, comme précédemment, le moyeu de roue libre selon ledit deuxième mode de réalisation comprend une roue libre (100′) destinée à entraîner unidirectionnellement le moyeu de roue libre (1′), l'ensemble ainsi constitué étant disposé pivotant autour d'un axe creux (3′) par l'intermédiaire d'un ensemble de plusieurs roulements à billes, à savoir : à une première extrémité, un premier roulement d'extrémité (42′) retenu par un première bague d'extrémité (44′) vissée en (45′) dans le corps de moyeu (2′), et à l'autre extrémité, deux roulements (22′, 22′a) disposés au niveau du corps de roue libre (4′). L'ensemble pivotant ainsi autour de l'axe longitudinal (XX′).

Comme précédemment et de façon connue, le corps de roue libre (4′) est muni sur sa périphérie, de cannelures non représentées, constituant un organe d'entraînement en rotation pour des pignons étagés (50′) constituant les éléments du changement de vitesses. Ces pignons sont séparés les uns des autres par des entretoises (52′) et sont calés en translation sur le corps (4′) par un écrou (53′) les plaquant contre la face de la collerette (13′) qui est opposée à celle portant le rochet. Le mécanisme de liaison unidirectionnelle permettant l'entraînement par la roue libre (100′), du moyeu de roue (1′), et ce, dans un seul sens de rotation est assuré, comme précédemment, par la coopération de plusieurs cliquets (16′) avec une denture de rochet (12′), lesdits cliquets (16′) étant mobiles et indépendants. Le moyeu de roue (1′) comprend bien entendu et de façon connue, deux flasques d'extrémité (2′a, 2′b) s'étendant diamétralement et sur lesquels les rayons, non représentés, sont destinés à venir s'accrocher. Notons aussi que comme selon le premier mode de réalisation, la denture de rochet (12′) est ménagée sur la face diamétrale (130) d'une collerette (13′) constituée par une paroi s'étendant diamétralement, ayant la forme d'un disque solidaire d'une douille filetée (14′), vissée dans l'extrémité intérieure du corps (4′) de roue libre. Par ailleurs, l'ensemble constitué par le corps de roue libre (4′) et la douille filetée (14′) est retenu pivotant autour d'une douille intérieure de pivotement (230) dont l'une des extrémités est filetée pour être vissée en (56) dans le corps de moyeu (2′), tandis que l'autre des extrémités comprend un épaulement (57) avec un joint d'étanchéité (58). Ladite douille interne a la forme générale d'un tube présentant un logement cylindrique central (55′) permettant le passage d'un arbre creux (3). Par ailleurs, la périphérie de la douille (230) présente une succession de deux parties cylindriques (231, 232) séparées par un épaulement (233). Le pivotement relatif de la roue libre (100′) par rapport à la douille (230) se faisant par l'intermédiaire de deux coussinets de frottement (234, 235) par exemple du type bronze/polytétrafluoréthylène ou du type roulement à rouleau, tandis que la retenue longitudinale relative selon l'axe (XX′) se fait par l'intermédiaire d'une bague d'appui (236) s'appuyant sur l'épaulement (232). Notons qu'en position d'entraînement, la douille (230) pivotant avec le moyeu (1′) pivote aussi de façon solidaire avec la roue libre (100′), et que ce n'est qu'en position de désengagement des cliquets, qu'il y a rotation relative de la roue libre (100′) par rapport à ladite douille (230).

Selon ce deuxième mode de réalisation, les cliquets d'entraînement (16′) sont des pistons coulissant selon un axe (ZZ′) et sont, à titre d'exemple, au nombre de quatre. Selon l'invention, chaque piston (16′) est donc mobile en translation selon une direction hors d'un plan diamétral (P′). A savoir, la direction de la translation (ZZ′) est concourante avec le plan diamétral (P′) et avantageusement inclinée par rapport à ceux-ci, d'un angle (A) d'environ 72 degrés. Ainsi, la direction (ZZ′) d'oscillation de chacun des pistons (16′) a une composante (z1,z′1) parallèle à l'axe (XX′) de rotation du moyeu et une direction (z2,z′2) perpendiculaire audit axe (XX′). Les deux composantes (z1,z′1) et (z2,z′2) étant avantageusement dans un plan (TT′) tangent au cercle (C1) passant par le point (C) de section de l'axe (ZZ′) avec le plan diamétral (P′). Bien entendu, ce plan (TT′) est avantageusement perpendiculaire au plan diamétral (P′), mais il pourrait en être autrement, et par exemple incliné. A cet effet, chaque piston (16′) a la forme générale d'un tube cylindrique comprenant une paroi périphérique (160) et une paroi d'extrémité (161) pour former un logement axial interne (162) dans lequel est logé un ressort de compression (163) prenant appui par ailleurs sur le fond (164) d'une cavité cylindrique de coulissement (8′).

La paroi d'extrémité (161) de chaque piston (16′) comprend par ailleurs un trou (165) permettant à l'air de s'échapper quand le piston passe de sa position en saillie vers sa position escamotée. Le système d'entraînement décrit selon un mode préféré comprend quatre pistons (16′) qui, en position active, font saillie par rapport à la face diamétrale (P′) du flasque (2′b). A cet effet, le flasque (2′b) comprend quatre trous cylindriques (8′) destinés à recevoir chacun un piston (16′) et dont l'axe (ZZ′) est incliné pour former un angle (A) par rapport au plan de la face diamétrale (P′). L'angle (A) peut bien entendu être compris entre 0 et 90 degrés, mais il est avantageusement compris entre 60 et 85 degrés, et peut être par exemple de 72 degrés.

La denture (12′) du rochet est constituée par une succession de profils en creux (120) réalisés sur la face diamétrale (130) de la collerette (13′). Chacun des creux (120) a une forme avantageuse sensiblement complémentaire à celle des pistons et est donc formé par un trou borgne à fond plat (57) d'axe incliné (ZZ′). Les dents d'appui pour les cliquets étant constituées par la succession des portions de parois intérieures cylindriques (58). Notons que la paroi (58) pourrait avoir d'autres formes que celles illustrées et être tout simplement courbe ou formée d'un ou plusieurs plans.

L'angle (A) et l'encastrement du piston sont tels que l'action (F1) de la paroi (58) de la dent sur le piston (16′) est sensiblement dans l'axe de l'action (F2) maximum de la paroi du trou d'encastrement (8′) sur le piston (16′), comme cela est représenté plus particulièrement à la figure 5. Avantageusement, toute la génératrice (a, b) du piston, qui est opposée à l'action (F1), se trouve être en appui sur la paroi d'encastrement. Cette disposition préférée permet de supprimer les couples de torsion que pourrait subir le piston et qui pourraient provoquer son coincement et perturber de ce fait son coulissement.

On comprendra aisément que lors du pivotement selon R1, du corps de roue libre (100), il y aura entraînement en pivotement selon R1 du moyeu de roue (1′) par coopération des différents cliquets (16′) contre lesquels les dents correspondantes prennent appui, tandis que la rotation du moyeu de roue se fera librement par enfoncement successif des cliquets (16′) dans leur logement quand seul le moyeu pivote alors que la roue libre est fixe.

Il va de soi que l'on ne sortirait pas du cadre de l'invention si le ou les cliquets (16, 16′) étaient montés mobiles sur la roue libre (100, 100′) alors que la denture du rochet serait solidaire du moyeu de roue.

Comme dans le premier mode de réalisation, une bague (32′) est prévue pour recouvrir périphériquement la collerette (13, 13′) de la roue libre (100′) et la partie cylindrique (2′c). Par ailleurs, l'ensemble constitué par le corps (4′) et la douille (14′) avec sa collerette (13′), voire même la bague d'appui (235) pourrait être un ensemble monobloc constituant une seule et même pièce.

Bien entendu, les pistons (16′) pourraient coulisser perpendiculairement par rapport à la face diamétrale (P). Dans ce cas, la face extérieure de sa paroi d'extrémité (161) aurait des pentes permettant une coopération unidirectionnelle avec la denture.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Moyeu de roue libre pour cycles d'axe (XX′) du type dans lequel l'entraînement du moyeu de roue (1, 1′) par la roue libre (100, 100′) se fait par une liaison unidirectionnelle constituée par la coopération d'au moins un cliquet mobile (16, 16′) sollicité par un système élastique (18, 163) pour passer d'une position escamotée inactive vers une position active en saillie, dans laquelle il coopère avec une denture, caractérisé en ce que le cliquet (16, 16′) est mobile dans une direction (ZZ′) hors d'un plan diamétral (P′), le cliquet étant disposé mobile sur le moyeu de roue (1, 1′) ou sur la roue libre (100, 100′), tandis que la denture est solidaire respectivement de ladite roue libre (100, 100′) ou du moyeu de roue (1, 1′).

2. Moyeu de roue libre pour cycles selon la revendication 1, caractérisé en ce qu'il comprend plusieurs cliquets mobiles indépendants (16, 16′), chacun des cliquets étant sollicité de sa position escamotée vers sa position en saillie, par un ressort (18, 163).

3. Moyeu de roue libre pour cycles selon la revendication 2, caractérisé en ce que chaque cliquet mobile (16) est pivotant autour d'un axe (YY′) disposé sensiblement dans un plan diamétral, pour osciller dans une direction sensiblement parallèle à l'axe (XX′).

4. Moyeu de roue libre pour cycles selon la revendication 2, caractérisé en ce que chaque cliquet mobile (16′) est un piston coulissant dans une direction (ZZ′) concourante à un plan diamétral (P′).

5. Moyeu de roue libre pour cycles selon la revendication 4, caractérisé en ce que la direction (ZZ′) de coulissement est telle qu'elle se décompose en au moins une direction parallèle à l'axe (XX′).

6. Moyeu de roue libre pour cycles selon la revendication 5, caractérisé en ce que la direction (ZZ′) comprend une direction diamétrale (z2,z′2) et une direction (z1,z′1) parallèle à l'axe (XX′).

7. Moyeu de roue libre pour cycles selon l'une quelconque des revendications précédentes, caractérisé en ce que la denture (12, 12′) est solidaire de la roue libre (100, 100′), tandis que les cliquets sont montés mobiles sur le moyeu de roue (1, 1′).

8. Moyeu de roue libre pour cycles selon l'une quelconque des revendications précédentes, caractérisé en ce que la denture (12 ,12′) est disposée sur la face diamétrale (130) d'une collerette (13, 13′) solidaire d'une douille (14, 14′) solidaire du corps (4, 4′) de la roue libre (100, 100′).

9. Moyeu de roue libre pour cycles selon l'une quelconque des revendications précédentes, caractérisé en ce que la roue libre (100′) est pivotante autour d'une douille (230) solidaire du moyeu (1′) et est retenue en translation par un épaulement (233) réalisé sur ladite douille (230).
